# EUROPÄISCHE PATENTSCHRIFT

(11) **EP 2 008 763 B1**
(45) Veröffentlichungstag und Bekanntmachung des Hinweises auf die Patenterteilung: **14.04.2010**
(21) Anmeldenummer: 07012868.1
(22) Anmeldetag: 30.06.2007
(51) Int. Cl.: B23Q 1/62, B23Q 5/28

(54) **Werkzeugmaschine mit einer Funktionseinheit mit Linearantrieb**
Machine tool with an operational unit with linear drive
Machine-outil dotée d'une unité fonctionnelle à moteur linéaire

(43) Veröffentlichungstag der Anmeldung: 31.12.2008
(73) Patentinhaber: TRUMPF Werkzeugmaschinen GmbH + Co. KG, 71254 Ditzingen (DE)
(72) Erfinder: Schmauder, Frank, 72555 Metzingen (DE)
(74) Vertreter: Kohler Schmid Möbus

(56) Entgegenhaltungen:
- EP-A- 0 871 284
- DE-A1- 19 601 018
- GB-A- 2 179 279
- US-A1- 2002 140 296

## Beschreibung

Die Erfindung betrifft eine Werkzeugmaschine mit einer Funktionseinheit sowie mit einem Linearantrieb für die Funktionseinheit,
- wobei die Funktionseinheit mit einer Bewegungseinheit bewegungsverbunden und die Bewegungseinheit mittels des Linearantriebes in zwei Achsrichtungen einer Bewegungsebene bewegbar ist und
- wobei der Linearantrieb zwei Antriebseinheiten umfasst, die jeweils einen Primärteil sowie einen dem Primärteil gegenüberliegenden Sekundärteil aufweisen und von denen jeweils eine zur Bewegung der Bewegungseinheit in einer der Achsrichtungen der Bewegungsebene der Bewegungseinheit vorgesehen ist.

Gattungsgemäßer Stand der Technik ist bekannt aus DE-196 01 018-A oder aus EP 1 287 946 A1. Diese letzte Druckschrift offenbart eine Werkzeugmaschine mit einer Funktionseinheit in Form eines Laserschneidkopfes. Dieser ist mittels zweier Linearmotoren in einer vertikalen y-z-Ebene bewegbar. Der erste Linearmotor treibt Linearlager, an denen der Laserschneidkopf angebracht ist und die eine Bewegungseinheit bilden, in z-Richtung an; der zweite Linearmotor bewirkt die Bewegung eines mit den Linearlagern und dem Laserschneidkopf versehenen Schlittens in y-Richtung. Beide Linearmotoren umfassen jeweils einen Primärteil mit einer Erregerspule sowie einen Sekundärteil mit Permanentmagneten. Der Primärteil des ersten, der z-Richtung zugeordneten Linearmotors ist an der einen Seite eines Primärteilgehäuses angeordnet. Der Primärteil des zweiten, der y-Richtung zugeordneten Linearmotors befindet sich an der senkrecht zu der y-z-Ebene gegenüberliegenden Seite des Primärteilgehäuses. Der Sekundärteil für die z-Richtung ist schneidkopfseitig montiert. Der Sekundärteil für die y-Richtung ist an einer in y-Richtung verlaufenden Maschinenbrücke angebracht. Bei Bewegungen des Schlittens bzw. des Laserschneidkopfes in y-Richtung muss der für diese Richtung vorgesehene Linearmotor den vollständigen Linearmotor für die z-Richtung mitbewegen, d.h. "mitschleppen". Aufgrund der Nebeneinanderanordnung der beiden Linearmotoren und der Linearlager sowie des Laserschneidkopfes wirkt auf das Führungssystem des Linearmotors für die y-Richtung eine verhältnismäßig hohe Momentenbelastung.

Die vorliegende Erfindung hat sich zum Ziel gesetzt, Werkzeugmaschinen mit einem kompakt bauenden Linearantrieb für Funktionseinheiten bereitzustellen.

Erfindungsgemäß gelöst wird diese Aufgabe durch den Gegenstand von Patentanspruch 1.

Aufgrund der im Falle der Erfindung gewählten Anordnung der Bewegungseinheit zwischen den Antriebseinheiten des Linearantriebes muss in keiner der Bewegungsrichtungen der Bewegungseinheit die für die jeweils andere Bewegungsrichtung vorgesehene Antriebseinheit vollständig mitgeschleppt werden. Infolgedessen reduzieren sich die Massen, die bei der Bewegung der Bewegungseinheit bzw. der zugehörigen Funktionseinheit erfindungsgemäßer Werkzeugmaschinen zu beschleunigen sind, auf ein Minimum. Dieser Umstand ermöglicht eine konstruktive Realisierung erfindungsgemäßer Linearantriebe mit Hilfe von verhältnismäßig klein bauenden Antriebskomponenten und Führungseinrichtungen. Zum Betrieb erfindungsgemäßer Linearantriebe reichen relativ kleine Antriebsleistungen aus, bzw. bereits mit herkömmlichen Antriebsleistungen sind die erfindungsgemäßen Linearantriebe außerordentlich leistungsfähig. Weiterhin bewirkt die im Falle der Erfindung realisierte "zentrische" Anordnung der Bewegungseinheit eine Minimierung der Momentenbelastung, welcher die Führungssysteme der Antriebseinheiten ausgesetzt sind. Das Führungssystem keiner Antriebseinheit wird durch die vollständige andere Antriebseinheit belastet. Auch die Minimierung der Momentenbelastung der Führungssysteme der Antriebseinheiten gestattet es, erfindungsgemäße Linearantriebe mit klein bauenden Antriebs- und Führungseinrichtungen zu realisieren. Zudem ergibt sich eine besondere Genauigkeit der von der Bewegungseinheit und damit auch von der zugehörigen Funktionseinheit ausgeführten Bewegungen. In entsprechender Weise wirkt es sich aus, dass Querkräfte die funktionsbedingt zwischen dem Primärteil und dem Sekundärteil einer Antriebseinheit auftreten, aufgrund der Mittenanordnung der Bewegungseinheit durch diejenigen Querkräfte zumindest teilweise kompensiert werden, die an der Antriebseinheit auf der gegenüberliegenden Seite der Bewegungseinheit erzeugt werden. Aufgrund dieser Querkraftkompensation sind über die Führungssysteme der Antriebseinheiten allenfalls geringe Belastungen abzutragen.

Besondere Ausführungsarten der Erfindung ergeben sich aus den abhängigen Patentansprüchen 2 bis 8.

Die Erfindungsbauart nach Patentanspruch 2 zeichnet sich durch eine einfache Konstruktion aus. Als Sekundärteile werden passive Elemente verwendet. Eine Zufuhr und Regelung von Erregerströmen ist nur für die Primärteile erforderlich.

In bevorzugter Ausgestaltung der Erfindung sind ausweislich Patentanspruch 3 die Sekundärteile beider Antriebseinheiten des Linearantriebes an der Bewegungseinheit angebracht. Die Bewegungseinheit ist demnach mit den passiven Teilen der Antriebseinheiten versehen. Es entfällt folglich die Notwendigkeit, bei den Bewegungen der Bewegungseinheit Zuleitungen mitzuführen. Auch besitzen die passiven Sekundärteile der Antriebseinheiten eine kleinere Masse als die aktiven Primärteile. Dementsprechend sind bei den Bewegungen der Bewegungseinheit nur besonders kleine Massen zu beschleunigen.

Im Interesse einer besonders kompakten Bauweise der Gesamtanordnung sind in weiterer Ausgestaltung der Erfindung die kennzeichnenden Merkmale von Patentanspruch 4 vorgesehen. Im Idealfall erübrigt sich der Einsatz separater Führungseinrichtungen für die Bewegungseinheit.

Erfindungsgemäß bevorzugte Möglichkeiten zur Umsetzung dieses Konzeptes ergeben sich aus den Patentansprüchen 5 und 6.

Patentanspruch 7 betrifft eine Ausführungsform der Erfindung, die sich durch eine besonders einfache konstruktive Gestaltung sowie durch eine besonders einfache Steuerung der Antriebseinheiten auszeichnet. Aufgrund der Verwendung gleichartiger Antriebseinheiten für beide Bewegungsrichtungen der Bewegungseinheit sind etwa für beide Bewegungsrichtungen gleiche Massenträgheiten zu berücksichtigen.

Besonders vorteilhaft und besonders praxisrelevant ist das erfindungsgemäße Konzept im Falle von Werkzeugmaschinen in Form von Laserbearbeitungsmaschinen, die von einem Laserbearbeitungskopf als Funktionseinheit Gebrauch machen (Patentanspruch 8).

Nachstehend wird die Erfindung anhand beispielhafter schematischer Darstellungen näher erläutert. Es zeigen:
- Fig. 1: eine kombiniert Stanz- /Laserschneidmaschine mit einem Stanzkopf sowie mit einem Laserschneidkopf,
- Fig. 2: eine Schnittdarstellung einer ersten Bauart eines Laserschneidkopfes einschließlich eines zugehörigen Linearantriebes zur Verwendung an der Stanz-/ Laserschneidmaschine gemäß Figur 1,
- Fig. 3: einen Schnitt entlang der Linie III-III in Figur 2,
- Fig. 4: einen Schnitt entlang der Linie IV-IV in Figur 2,
- Fig. 5: einen Schnitt entlang der Linie V-V in Figur 2,
- Fig. 6: eine perspektivische Darstellung einer zweiten Bauart eines Laserschneidkopfes einschließlich eines zugehörigen Linearantriebes zur Verwendung an der Stanz-/ Laserschneidmaschine gemäß Figur 1 und
- Fig. 7: einen Schnitt entlang der Linie VII-VII in Figur 6.

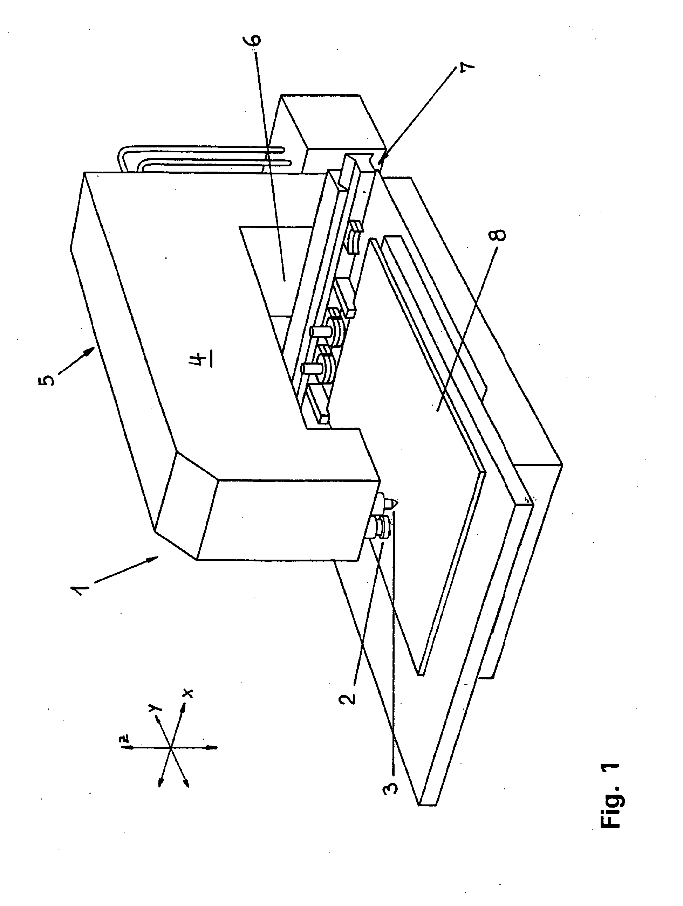

Gemäß Figur 1 ist eine Werkzeugmaschine 1 als kombinierte Stanz- /Laserschneidmaschine ausgeführt. Als solche ist die Werkzeugmaschine 1 mit einem Stanzkopf 2 sowie mit einer weiteren Funktionseinheit in Form eines Laserschneidkopfes 3 versehen. Sowohl der Stanzkopf 2 als auch der Laserschneidkopf 3 sind an dem freien Ende eines oberen Gestellschenkels 4 an einem C-förmigen Maschinengestell 5 angeordnet. In einem Rachen 6 des Maschinengestells 5 ist eine herkömmliche Koordinatenführung 7 untergebracht. Diese dient dazu, ein zu bearbeitendes Blech 8 in der für dessen Bearbeitung erforderlichen Art und Weise gegenüber dem Stanzkopf 2 sowie dem Laserschneidkopf 3 zu bewegen. Eine Relativbewegung von Blech 8 und Laserschneidkopf 3 kann außerdem durch eine Bewegung des Laserschneidkopfes 3 gegenüber dem Blech 8 realisiert werden. Die Bewegungsmöglichkeiten des Laserschneidkopfes 3 sind in Figur 1 durch Koordinatenachsen x, y, z veranschaulicht.

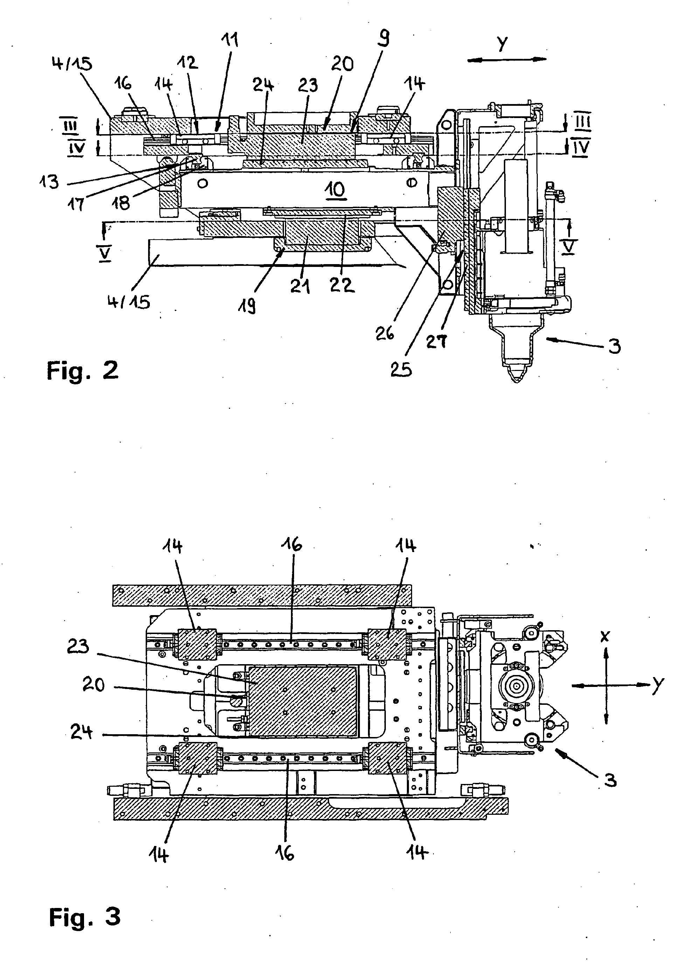

Die Bewegungen des Laserschneidkopfes 3 in Richtung der Koordinatenachsen x, y, z wird mittels eines Linearantriebes 9 erzeugt, dessen konstruktiver Aufbau und dessen Funktionsweise sich im Einzelnen anhand der Figuren 2 bis 5 ergeben.

Ausweislich Figur 2 ist der Laserschneidkopf 3 an einer als Schlitten 10 ausgebildeten Bewegungseinheit vorgesehen. Der Schlitten 10 seinerseits ist an dem oberen Gestellschenkel 4 des Maschinengestells 5 der Werkzeugmaschine 1 sowohl in x-Richtung als auch y-Richtung beweglich gelagert. Die x-Richtung verläuft in Figur 2 senkrecht zur Zeichenebene.

Zur Führung des Schlittens 10 sowie des daran angebrachten Laserschneidkopfes 3 bei Bewegungen in x- sowie in y-Richtung dient ein Führungssystem 11. Dieses umfasst eine y-Führung 12 sowie eine x-Führung 13 an einem plattenartigen Teil des Schlittens 10.

Teil der y-Führung 12 sind insgesamt vier y-Linearlager 14 (Figur 3), die mit einer maschinengestellfesten Tragstruktur in Form eines Gehäuses 15 verschraubt sind. Jeweils zwei y-Linearlager 14 führen eine in y-Richtung verlaufende y-Führungsschiene 16. Bei Bewegungen des Schlittens 10 sowie des Laserschneidkopfes 3 in y-Richtung bewegen sich die y-Führungsschienen 16 gemeinschaftlich mit Schlitten 10 und Laserschneidkopf 3 relativ zu den maschinengestellfesten y-Linearlagern 14.

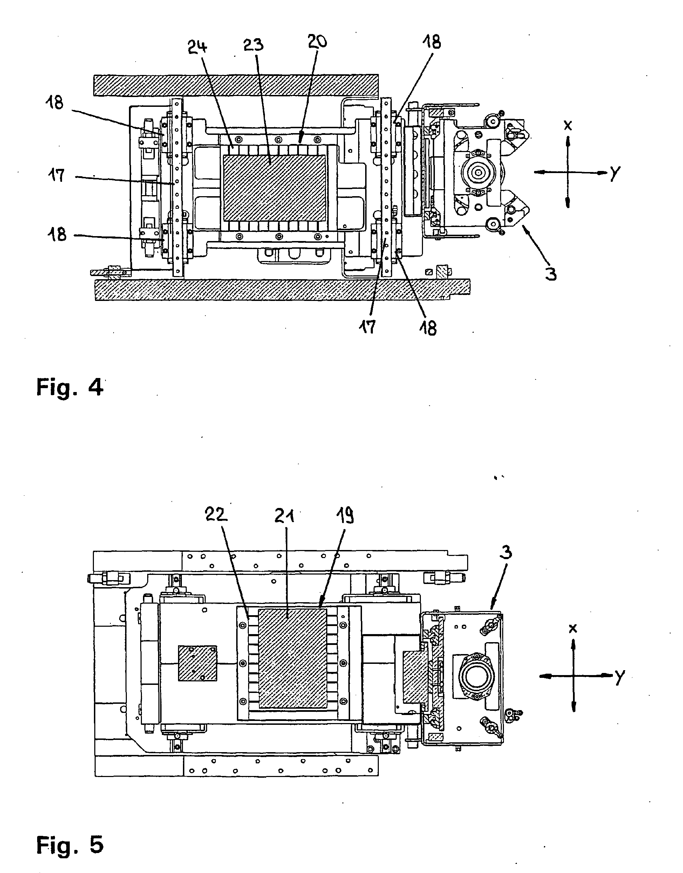

Mit den y-Führungsschienen 16 verbunden sind zwei in x-Richtung verlaufende und in y-Richtung voneinander beabstandete x-Führungsschienen 17 (Figur 4). Die x-Führungsschienen 17 wiederum lagern insgesamt vier x-Linearlager 18. Die x-Linearlager 18 schließlich sind an dem Schlitten 10 befestigt. Bei Bewegungen des Schlittens 10 und des Laserschneidkopfes 3 in x-Richtung verlagern sich Schlitten 10 und Laserschneidkopf 3 gemeinschaftlich mit den x-Linearlagern 18 längs der x-Führungsschienen 17.

Alles in allem ist das Führungssystem 11 für den Laserschneidkopf 3 nach Art eines Kreuzschlittens ausgeführt. Mittels des kreuzschlittenartigen Führungssystems 11 wird eine von der x-Koordinatenachse sowie von der y-Koordinatenachse aufgespannte horizontale Bewegungsebene des Schlittens 10 und damit des Laserschneidkopfes 3 definiert.

Zum Antrieb von Schlitten 10 und Laserschneidkopf 3 in dieser horizontalen Bewegungsebene dienen zwei Antriebseinheiten des Linearantriebes 9, im Einzelnen eine x-Antriebseinheit 19 sowie eine y-Antriebseinheit 20.

Jeweils für sich alleine betrachtet, handelt es sich sowohl bei der x-Antriebseinheit 19 als auch bei der y-Antriebseinheit 20 um einen herkömmlichen Linearmotor. Dementsprechend umfasst die x-Antriebseinheit 19 als Primärteil 21 eine Erregerspule und als Sekundärteil 22 eine Aneinanderreihung von Permanentmagneten in x-Richtung (Figur 5). In analoger Weise bilden ein als Erregerspule ausgebildeter Primärteil 23 sowie ein Sekundärteil 24 die y-Antriebseinheit 20. Der Sekundärteil 24 der y-Antriebseinheit 20 umfasst eine Mehrzahl von in y-Richtung aufeinander folgenden Permanentmagneten (Figur 4). Die Erstreckung der Permanentmagneten des Sekundärteils 22 in y-Richtung ist auf die Länge des Verfahrweges von Schlitten 10 und Laserschneidkopf 3 in y-Richtung abgestimmt. Entsprechend berücksichtigt die Bemessung der Permanentmagneten des Sekundärteils 24 in x-Richtung die Verfahrweglänge von Schlitten 10 und Laserschneidkopf 3 in dieser Richtung.

Von besonderer Bedeutung ist die Verteilung der Primärteile 21, 23 sowie der Sekundärteile 22, 24 auf den Schlitten 10 einerseits sowie auf den oberen Gestellschenkel 4 bzw. das Maschinengestell 5 andererseits.

An einander senkrecht zu der horizontalen Bewegungsebene des Schlittens 10 sowie des Laserschneidkopfes 3 gegenüberliegenden Seiten des Schlittens 10 sind gleichartige Teile der x-Antriebseinheit 19 sowie der y-Antriebseinheit 20 montiert. In dem gezeigten Beispielsfall handelt es sich dabei um den Sekundärteil 22 der x-Antriebseinheit 19 sowie um den auf der gegenüberliegenden Seite des Schlittens 10 angeordneten Sekundärteil 24 der y-Antriebseinheit 20. Der Sekundärteil 22 sowie der Sekundärteil 24 werden gemeinschaftlich mit dem Schlitten 20 bzw. Laserschneidkopf 3 bewegt. Da es sich bei den Sekundärteilen 22, 24 um passive Einheiten handelt, sind bei Bewegungen des Schlittens 10 sowie des Laserschneidkopfes 3 vorteilhafterweise keine für den Betrieb der Antriebseinheiten 19, 20 benötigten Versorgungsleitungen mitzuführen. Auch sind die Massen der Sekundärteile 22, 24 relativ gering.

Der dem Sekundärteil 22 zugeordnete Primärteil 21 der x-Antriebseinheit 19 ist an dem oberen Gestellschenkel 4 des Maschinengestells 5, im Einzelnen an dem maschinengestellfesten Gehäuse 15, montiert. Dementsprechend bleibt der Primärteil 21 der x-Antriebseinheit 19 bei Bewegungen von Schlitten 10 und Laserschneidkopf 3 ortsfest. Der Anschluss des Primärteils 21 an die zugehörigen Versorgungsleitungen, insbesondere der Anschluss der Erregerspule an die elektrische Energieversorgung, gestaltet sich folglich ausgesprochen einfach. Entsprechend stellen sich die Verhältnisse an der y-Antriebseinheit 20 dar. Dem an dem Schlitten 10 angebrachten passiven Sekundärteil 24 liegt der Primärteil 23 gegenüber, der seinerseits an dem maschinengestellfesten Gehäuse 15 montiert ist und folglich bei Bewegungen des Schlittens 10 gleichfalls seine Montagelage beibehält.

Querkräfte die bei Betrieb der x-Antriebseinheit 19 sowie der y-Antriebseinheit 20 funktionsbedingt zwischen dem Primärteil 21 und dem Sekundärteil 22 einerseits sowie dem Primärteil 23 und dem Sekundärteil 24 andererseits auftreten, kompensieren sich gegenseitig. Bei entsprechender Regelung der durch den Primärteil 21 sowie den Primärteil 23 geleiteten Erregerströme kann sich der Betrag der Resultierenden aus den sich an der x-Antriebseinheit 19 sowie an der y-Antriebseinheit 20 einstellenden Querkräften zu Null ergeben. Von dem Führungssystem 11 ist in diesem Fall keine durch die auftretenden Querkräfte bedingte Last abzutragen.

Werden die Erregerströme durch den Primärteil 21 und den Primärteil 23 derart geregelt, dass sich eine in Figur 2 vertikal nach oben gerichtete resultierende Querkraft ergibt, deren Betrag der Gewichtskraft der Einheit aus Schlitten 10 und Laserschneidkopf 3 entspricht, so kann sogar diese Gewichtskraft in den oberen Gestellschenkel 4 des Maschinengestells 5 abgetragen werden, ohne dass zu diesem Zweck das Führungssystem 11 genutzt werden müsste.

In jedem Fall ist ein Führungssystem 11 mit geringem Lastaufnahmevermögen ausreichend. Entsprechend klein baut das Führungssystem 11 und entsprechend kompakt gestaltet sich die Gesamtanordnung.

Zur Bewegung des Laserschneidkopfes 3 in z-Richtung dient eine z-Antriebseinheit 25 mit einem an dem Schlitten 10 fest montierten Primärteil 26 sowie einem mit dem Laserschneidkopf 3 verbundenen Sekundärteil 27. Auch bei der z-Antriebseinheit 25 handelt es sich um einen Linearmotor üblicher Bauweise.

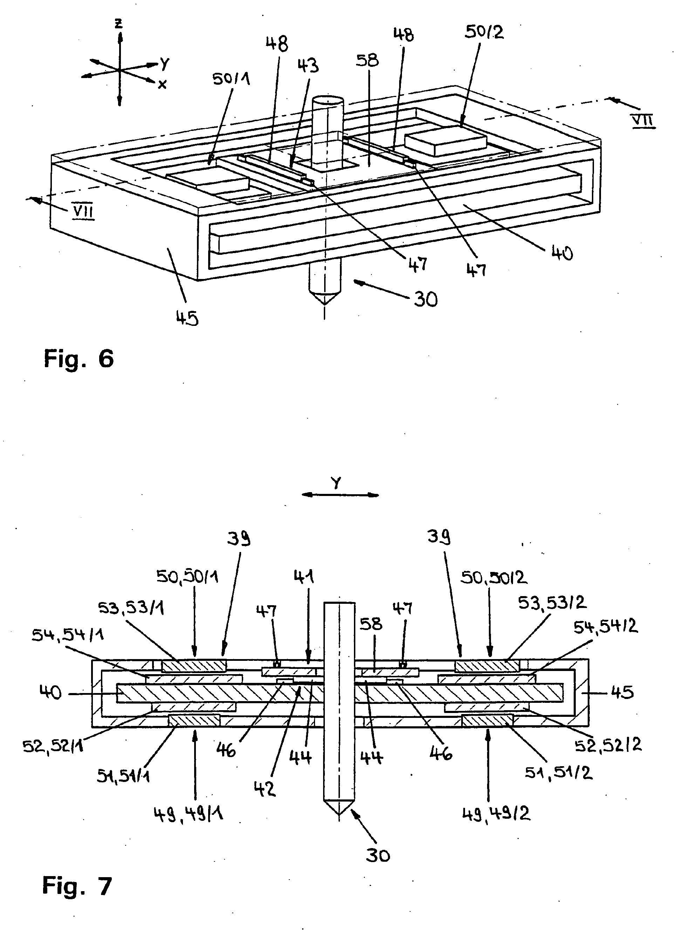

Die Figuren 6 und 7 betreffen eine Anordnung, die an der Werkzeugmaschine 1 anstelle der Anordnung gemäß den Figuren 2 bis 5 vorgesehen sein kann. Beide Anordnungen stimmen in ihrer Funktionsweise grundsätzlich miteinander überein.

Ausweislich der Figuren 6 und 7 ist als Funktionseinheit ein stark schematisiert dargestellter Laserschneidkopf 30 an einem als Bewegungseinheit dienenden Schlitten 40 montiert. Gemeinschaftlich mit dem Laserschneidkopf 30 kann der Schlitten 40 in x-Richtung sowie in y-Richtung bewegt werden. Dabei werden der Laserschneidkopf 30 und der Schlitten 40 von einem Linearantrieb 39 angetrieben. Zur Führung der Bewegung von Laserschneidkopf 30 und Schlitten 40 ist ein Führungssystem 41 vorgesehen.

Das Führungssystem 41 wird gebildet von einer y-Führung 42 sowie von einer x-Führung 43. Die y-Führung 42 umfasst y-Linearlager 44 sowie y-Führungsschienen 46, die beidseits des Laserschneidkopfes 30 in y-Richtung verlaufen. Die y-Führungsschienen 46 sind an der Oberseite des plattenartigen Schlittens 40 angebracht. Die y-Linearlager 44 befinden sich an der Unterseite einer Zwischenplatte 58 des nach Art eines Kreuzschlittens ausgeführten Führungssystems 41. An ihrer Oberseite ist die Zwischenplatte 58 mit x-Führungsschienen 47 versehen, die in x-Richtung verlaufen und in y-Richtung voneinander beabstandet sind. Geführt werden die x-Führungsschienen 47 durch x-Linearlager 48 (Figur 6). Die x-Linearlager 48 sind in Einbaulage ortsunveränderlich mit dem oberen Gestellschenkel 4 des Maschinengestells 5 verbunden. Auf die beschriebene Art und Weise definiert das Führungssystem 41 die von der x-Koordinatenachse sowie von der y-Koordinatenachse aufgespannte horizontale Bewegungsebene von Schlitten 40 und Laserschneidkopf 30.

Der Linearantrieb 39 umfasst eine x-Antriebseinheit 49 sowie eine y-Antriebseinheit 50. Sowohl die x-Antriebseinheit 49 als auch die y-Antriebseinheit 50 sind zweiteilig ausgebildet. Eine Antriebsteileinheit 49/1 sowie eine Antriebsteileinheit 49/2 der x-Antriebseinheit 49 sowie eine Antriebsteileinheit 50/1 und eine Antriebsteileinheit 50/2 der y-Antriebseinheit 50 sind jeweils beidseits des Laserschneidkopfes 30 angeordnet.

Zweigeteilt sind ein Primärteil 51 sowie ein Sekundärteil 52 der x-Antriebseinheit 49 ebenso wie ein Primärteil 53 und ein Sekundärteil 54 der y-Antriebseinheit 50. Vorgesehen sind dementsprechend Primärteilelemente 51/1, 51/2 und Sekundärteilelemente 52/1, 52/2 der x-Antriebseinheit 49 sowie Primärteilelemente 53/1, 53/2 und Sekundärteilelemente 54/1, 54/2 der y-Antriebseinheit 50. Bei den Primärteilelementen 51/1, 51/2; 53/1, 53/2 handelt es sich um Erregerspulen, bei den Sekundärteilelementen 52/1, 52/2; 54/1, 54/2 um Aneinanderreihungen von Permanentmagneten. Entsprechend den Verhältnissen gemäß den Figuren 2 bis 5 sind im Falle der Anordnung nach den Figuren 6 und 7 die Sekundärteile 52, 54 an einander gegenüberliegenden Seiten des Schlittens 40 angebracht und die Primärteile 51, 53 gestellfest mit dem oberen Gestellschenkel 4 der Werkzeugmaschine 1 verbunden. Unter anderem zu diesem Zweck dient ein maschinengestellfestes Gehäuse 45. Durch die bezogen auf den Schlitten 40 spiegelsymmetrische Anordnung der x-Antriebseinheit 49 und der y-Antriebseinheit 50 können auch an dem Linearantrieb 39 antriebsbedingte Querkräfte kompensiert werden.

Abweichend von dem Beispielsfall gemäß den Figuren 2 bis 5 liegt im Falle der Vorrichtungsbauart nach den Figuren 6 und 7 der Schwerpunkt der Gesamtanordnung im Zentrum des Führungssystems 41. Aufgrund der sich damit einstellenden Lastverhältnisse können die y-Führung 42 sowie die x-Führung 43 besonders klein bauen. Gleichzeitig lassen sich die Bewegungen des Laserschneidkopfes 30 mit außerordentlich hoher Genauigkeit steuern.

In den Figuren 6 bis 7 der Einfachheit halber nicht dargestellt ist eine Einrichtung zur Einstellung des Laserschneidkopfes 30 in z-Richtung.

## Patentansprüche

1. Werkzeugmaschine mit einer Funktionseinheit (3, 30) sowie mit einem Linearantrieb (9, 39) für die Funktionseinheit (3,30),
• wobei die Funktionseinheit (3,30) mit einer Bewegungseinheit (10, 40) bewegungsverbunden und die Bewegungseinheit (10, 40) mittels des Linearantriebes (9, 39) in zwei Achsrichtungen (x, y) einer Bewegungsebene bewegbar ist und
• wobei der Linearantrieb (9, 39) zwei Antriebseinheiten (19, 49; 20, 50) umfasst, die jeweils einen Primärteil (21, 51; 23, 53) sowie einen dem Primärteil (21, 51; 23, 53) gegenüberliegenden Sekundärteil (22, 52; 24, 54) aufweisen und von denen jeweils eine zur Bewegung der Bewegungseinheit (10, 40) in einer der Achsrichtungen (x, y) der Bewegungsebene der Bewegungseinheit (10, 40) vorgesehen ist,
**dadurch gekennzeichnet, dass**
• die Primärteile (21, 51; 23, 53) oder die Sekundärteile (22, 52; 24, 54) beider Antriebseinheiten (19, 49; 20, 50) des Linearantriebes (9, 39) an der Bewegungseinheit (10, 40) angebracht sind,
• wobei der Primärteil (21, 51; 23, 53) oder der Sekundärteil (22, 52; 24, 54) der einen Antriebseinheit (19, 49; 20, 50) an derjenigen Seite der Bewegungseinheit (10, 40) angeordnet ist, welche der mit dem Primärteil (21, 51; 23, 53) oder dem Sekundärteil (22, 52; 24, 54) der anderen Antriebseinheit (19, 49; 20, 50) versehenen Seite der Bewegungseinheit (10, 40) senkrecht zu deren Bewegungsebene gegenüberliegt.

2. Werkzeugmaschine nach Anspruch 1, **dadurch gekennzeichnet, dass** die Primärteile (21, 51; 23, 53) der Antriebseinheiten (19, 49; 20, 50) mindestens eine Erregerspule und die Sekundärteile (22, 52; 24, 54) der Antriebseinheiten (19, 49; 20, 50) mindestens einen Permanentmagneten umfassen.

3. Werkzeugmaschine nach einem der vorhergehenden Ansprüche, **dadurch gekennzeichnet, dass** an der Bewegungseinheit (10, 40) die Sekundärteile (22, 52; 24, 54) der Antriebseinheiten (19, 49; 20, 50) des Linearantriebes (9, 39) angebracht sind.

4. Werkzeugmaschine nach einem der vorhergehenden Ansprüche, **dadurch gekennzeichnet, dass** die Bewegungseinheit (10, 40) bei ihrer Bewegung geführt ist und dass der Linearantrieb (9, 39) derart ausgebildet ist, dass zur Führung der Bewegungseinheit (10, 40) insbesondere keine antriebsbedingten Kräfte in Querrichtung der Bewegungsebene der Bewegungseinheit (10, 40) (Querkräfte) aufzunehmen sind.

5. Werkzeugmaschine nach einem der vorhergehenden Ansprüche, **dadurch gekennzeichnet, dass** die Erregerströme der Primärteile (21, 51; 23, 53) der Antriebseinheiten (19, 49; 20, 50) derart geregelt sind, dass zur Führung der Bewegungseinheit (10, 40) keine Querkräfte aufzunehmen sind.

6. Werkzeugmaschine nach einem der vorhergehenden Ansprüche, **dadurch gekennzeichnet, dass** die Bauweisen der Antriebseinheiten (19, 49; 20, 50) derart gewählt sind, dass zur Führung der Bewegungseinheit (10, 40) keine Querkräfte aufzunehmen sind.

7. Werkzeugmaschine nach einem der vorhergehenden Ansprüche, **dadurch gekennzeichnet, dass** die Antriebseinheiten (19, 49; 20, 50) baugleich und die Erregerströme ihrer Primärteile (21, 51; 23, 53) gleich groß sind.

8. Werkzeugmaschine nach einem der vorhergehenden Ansprüche in Form einer Laserbearbeitungsmaschine mit einem Laserbearbeitungskopf als Funktionseinheit (3, 30).

## Claims

1. Machine tool having a functional unit (3, 30) and having a linear drive (9, 39) for the functional unit (3, 30),
• the functional unit (3, 30) being connected in terms of movement to a movement unit (10, 40) and the movement unit (10, 40) being movable in two axial directions (x, y) of a plane of movement by means of the linear drive (9, 39) and
• the linear drive (9, 39) comprising two drive units (19, 49; 20, 50), each of which has a respective primary component (21, 51; 23, 53) and a respective secondary component (22, 52; 24, 54) lying opposite the primary component (21, 51; 23, 53) and of which a respective one is provided to move the movement unit (10, 40) in one of the axial directions (x, y) of the plane of movement of the movement unit (10, 40),
**characterised in that**
• the primary components (21, 51; 23, 53) or the secondary components (22, 52; 24, 54) of the two drive units (19, 49; 20, 50) of the linear drive (9, 39) are fitted to the movement unit (10, 40),
• the primary component (21, 51; 23, 53) or the secondary component (22, 52; 24, 54) of the one drive unit (19, 49; 20, 50) being arranged on that side of the movement unit (10, 40) which lies opposite the side of the movement unit (10, 40) provided with the primary component (21, 51; 23, 53) or the secondary component (22, 52; 24, 54) of the other drive unit (19, 49; 20, 50), perpendicularly to the plane of movement thereof.

2. Machine tool according to claim 1, **characterised in that** the primary components (21, 51; 23, 53) of the drive units (19, 49; 20, 50) include at least one exciting coil and the secondary components (22, 52; 24, 54) of the drive units (19, 49; 20, 50) include at least one permanent magnet.

3. Machine tool according to any one of the preceding claims, **characterised in that** the secondary components (22, 52; 24, 54) of the drive units (19, 49; 20, 50) of the linear drive (9, 39) are fitted to the movement unit (10, 40).

4. Machine tool according to any one of the preceding claims, **characterised in that** the movement unit (10, 40) is guided in its movement and **in that** the linear drive (9, 39) is in a form such that, in particular, no drive-induced forces in the transverse direction of the plane of movement of the movement unit (10, 40) (transverse forces) have to be absorbed in order to guide the movement unit (10, 40).

5. Machine tool according to any one of the preceding claims, **characterised in that** the exciting currents of the primary components (21, 51; 23, 53) of the drive units (19, 49; 20, 50) are regulated in such a manner that no transverse forces have to be absorbed in order to guide the movement unit (10, 40).

6. Machine tool according to any one of the preceding claims, **characterised in that** the constructions of the drive units (19, 49; 20, 50) are so selected that no transverse forces have to be absorbed in order to guide the movement unit (10, 40).

7. Machine tool according to any one of the preceding claims, **characterised in that** the drive units (19, 49; 20, 50) are structurally identical and the exciting currents of their primary components (21, 51; 23, 53) are of equal size.

8. Machine tool according to any one of the preceding claims in the form of a laser processing machine having a laser processing head as the functional unit (3, 30).

## Revendications

1. Machine-outil dotée d'une unité fonctionnelle (3, 30) ainsi que d'un moteur linéaire (9, 39) pour l'unité fonctionnelle (3, 30),
• dans laquelle l'unité fonctionnelle (3, 30) est liée en déplacement avec une unité de déplacement (10, 40) et l'unité de déplacement (10, 40) est déplaçable au moyen du moteur linéaire (9, 39) dans deux directions d'axes (x, y) d'un plan de déplacement et
• dans laquelle le moteur linéaire (9, 39) comprend deux unités d'entraînement (19, 49 ; 20, 50) qui présentent chacune une partie primaire (21, 51 ; 23, 53) ainsi qu'une partie secondaire (22, 52 ; 24, 54) située en face de la partie primaire (21, 51 ; 23, 53) et qui sont respectivement prévues pour déplacer l'unité de déplacement (10, 40) dans une des directions d'axes (x, y) du plan de déplacement de l'unité de déplacement (10, 40),
**caractérisée en ce que**
• les parties primaires (21, 51 ; 23, 53) ou les parties secondaires (22, 52 ; 24, 54) des deux unités d'entraînement (19, 49 ; 20, 50) du moteur linéaire (9, 39) sont disposées sur l'unité de déplacement (10, 40),
• la partie primaire (21, 51 ; 23, 53) ou la partie secondaire (22, 52 ; 24, 54) d'une unité d'entraînement (19, 49 ; 20, 50) étant disposée du côté de l'unité de'déplacement (10, 40) qui est opposé, perpendiculairement au plan de déplacement de celle-ci, au côté de l'unité de déplacement (10, 40) pourvu de la partie primaire (21, 51 ; 23, 53) ou de la partie secondaire (22, 52 ; 24, 54) de l'autre unité d'entraînement (19, 49 ; 20, 50).

2. Machine-outil selon la revendication 1, **caractérisée en ce que** les parties primaires (21, 51 ; 23, 53) des unités d'entraînement (19, 49 ; 20, 50) comprennent au moins une bobine d'excitation et les parties secondaires (22, 52 ; 24, 54) des unités d'entraînement (19, 49 ; 20, 50) au moins un aimant permanent.

3. Machine-outil selon une des revendications précédentes, **caractérisée en ce que** les parties secondaires (22, 52 ; 24, 54) des unités d'entraînement (19, 49 ; 20, 50) du moteur linéaire (9, 39) sont disposées sur l'unité de déplacement (10, 40).

4. Machine-outil selon une des revendications précédentes, **caractérisée en ce que** l'unité de déplacement (10, 40) est guidée lors de son déplacement et que le moteur linéaire (9, 39) est conçu de manière que, pour le guidage de l'unité de déplacement (10, 40), il n'y ait en particulier pas de forces dues à l'entraînement en direction transversale du plan de déplacement de l'unité de déplacement (10, 40) (forces transversales) à absorber.

5. Machine-outil selon une des revendications précédentes, **caractérisée en ce que** les courants d'excitation des parties primaires (21, 51 ; 23, 53) des unités d'entraînement (19, 49 ; 20, 50) sont réglés de manière que, pour le guidage de l'unité de déplacement (10, 40), il n'y ait pas de forces transversales à absorber.

6. Machine-outil selon une des revendications précédentes, **caractérisée en ce que** les modes de construction des unités d'entraînement (19, 49 ; 20, 50) sont choisis de manière que, pour le guidage de l'unité de déplacement (10, 40), il n'y ait pas de forces transversales à absorber.

7. Machine-outil selon une des revendications précédentes, **caractérisée en ce que** les unités d'entraînement (19, 49 ; 20, 50) sont identiques et les courants d'excitation de leurs parties primaires (21, 51 ; 23, 53) sont égaux.

8. Machine-outil selon une des revendications précédentes sous la forme d'une machine d'usinage par laser comportant une tête d'usinage par laser comme unité fonctionnelle (3, 30).
